(19) Europäisches Patentamt / European Patent Office / Office européen des brevets

(11) **EP 1 434 164 B1**

(12) **EUROPEAN PATENT SPECIFICATION**

(45) Date of publication and mention
of the grant of the patent:
**15.04.2009 Bulletin 2009/16**

(51) Int Cl.:
***G06K 9/00*** (2006.01)

(21) Application number: **03258116.7**

(22) Date of filing: **22.12.2003**

(54) **Method of extracting teeth area from teeth image and personal identification method and apparatus using the teeth image**

Verfahren zur Extraktion einer Region mit Zähnen aus einem Zahnbild und Verfahren und Vorrichtung zur Personenidentifikation mittels dieses Bildes

Procédé d'extraction d'une région de dents d'un image dentaire et procédé et appareil d'identification de personnes avec cet image

(84) Designated Contracting States:
**DE FR GB**

(30) Priority: **28.12.2002 KR 2002085916**

(43) Date of publication of application:
**30.06.2004 Bulletin 2004/27**

(73) Proprietor: **SAMSUNG ELECTRONICS CO., LTD.**
**Suwon-si,**
**Gyeonggi-do 442-742 (KR)**

(72) Inventors:
• **Kim, Tae-woo**
**Songpa-gu**
**Seoul (KR)**
• **Yoon, Gil-won**
**Seongdong-gu**
**Seoul (KR)**

(74) Representative: **Anderson, James Edward George et al**
**Elkington and Fife LLP**
**Prospect House**
**8 Pembroke Road**
**Sevenoaks, Kent TN13 1XR (GB)**

(56) References cited:
**US-A- 4 031 640      US-A- 5 680 479**
**US-A- 6 028 960      US-A1- 2002 186 818**

• **BRITISH DENTAL JOURNAL. 14 APR 2001, vol. 190, no. 7, 14 April 2001 (2001-04-14), pages 359-366, XP009049027 ISSN: 0007-0610 & DATABASE MEDLINE [Online] US NATIONAL LIBRARY OF MEDICINE (NLM), BETHESDA, MD, US; 14 April 2001 (2001-04-14), PRETTY I A ET AL: "A look at forensic dentistry--Part 1: The role of teeth in the determination of human identity." Database accession no. NLM11338039**

**EP 1 434 164 B1**

**Description**

The present invention relates to personal identification technology, and more particularly, to a method of extracting a teeth area from a teeth image, and a personal identification method and apparatus using characteristic elements of the extracted teeth area.

Personal identification is performed to allow access to a particular zone, such as a security area, using a person's face, fingerprint, iris, veins in the back of the hand, or voice. However, a complex algorithm is required for face recognition, and expensive equipment is required for iris recognition. In addition, it is difficult to recognize a fingerprint when the fingerprint is not clear or when a finger is stained with a foreign substance or wet because of sweat. Also, vein patterns in the back of the hand vary with circumstances. Accordingly, a personal identification method using a body part which rarely changes and the image of which can be analyzed using simple and inexpensive software and hardware is desired.

US 5680479 discloses, a method for optical text character recognition whereby individual lines of text and individual characters are separated from an image by obtaining projections of pixel density.

US 2002/0186818 A1 discloses the general concept of biometric authentication using patterns of teeth on dental x-rays, particularly using teeth shape, crown shape, and information regarding cavities, periodontal disease and bone structure.

US 6028960 discloses a technique for identifying teeth pixels in a face image for use in automated lip reading and character animation. The teeth pixels are identified essentially on the basis of color.

According to an aspect of the present invention, there is provided a method of identifying a person , the method comprising extracting an upper teeth area and a lower teeth area from a teeth image by : separating an inner mouth area from a teeth area of the teeth image; defining an interline between an upper teeth portion and a lower teeth portion of the teeth area on the basis of the inner mouth area; and extracting an upper teeth area and a lower teeth area on the basis of the interline.

According to another aspect of the present invention, there is provided a personal identification method using a teeth image, comprising: constructing a database by correspondently storing teeth images from a plurality of persons and at least one teeth characteristic element of each person; the method described above; detecting one or more teeth characteristic elements from the upper and lower teeth areas; and searching the database based on the detected one or more teeth characteristic elements and determining identification pass or fail according to a similarity between the teeth image of the person to be identified and a teeth image searched from the database.

According to another aspect of the invention, there is provided a computer readable recording medium on which is recorded a program for performing one of the above described methods.

According to still another aspect of the present invention, there is provided a personal identification apparatus comprising: a teeth image database for correspondently storing teeth images from a plurality of persons and at least one teeth characteristic element of each of the persons; a teeth image acquisition unit arranged to acquire a teeth image of a person to be identified; a teeth area extractor arranged to perform first thresholding on the teeth image provided from the teeth image acquisition unit to separate an inner mouth area from a teeth area of the teeth image, perform horizontal projection on the inner mouth area to define an interline between an upper teeth portion and a lower teeth portion, and extract an upper teeth area and a lower teeth area based on the interline; a characteristic detector arranged to perform vertical projection on the extracted upper and lower teeth areas to detect one or more teeth characteristic elements for distinguishing an individual person's teeth from others; a search section arranged to search the teeth image database using at least one among the teeth characteristic elements detected by the characteristic detector; and an identification section arranged to determine identification pass or fail according to a similarity between the teeth image of the person to be identified and a teeth image searched from the search section.

The present invention thus provides a method of extracting a teeth area from a teeth image of a person to be identified.

The present invention also provides a personal identification method and apparatus using a teeth area which rarely changes and the image of which is can be analyzed in a simple way.

The above and other features, and advantages of the present invention will become more apparent by describing in detail preferred embodiments thereof with reference to the attached drawings in which:

FIG. 1 is a block diagram of a personal identification apparatus using a teeth image according to a preferred embodiment of the present invention;
FIG. 2 is a detailed block diagram of a teeth image processing unit shown in FIG. 1;
FIG. 3 is a flowchart showing operations performed by a teeth extractor shown in FIG. 2;
FIGS. 4A through 4F are diagrams showing the results of the respective operations shown in FIG. 3;
FIGS. 5A and 5B are diagrams for explaining the operation of a characteristic detector shown in FIG. 2;
FIGS. 6A and 6B are examples of teeth images used for segmenting a teeth area and extracting characteristic elements according to an embodiment of the present invention;

FIGS. 7A and 7B are examples of upper and lower teeth areas extracted from the teeth areas, respectively, shown in FIGS. 6A and 6B;

FIGS. 8A and 8B are graphs showing the results of performing vertical projection on the upper teeth areas shown in the FIGS. 7A and 7B, respectively; and

FIGS. 9A and 9B are graphs showing the results of performing vertical projection on the lower teeth areas shown in the FIGS. 7A and 7B, respectively.

Hereinafter, preferred embodiments of the present invention will be described in detail with reference to the attached drawings.

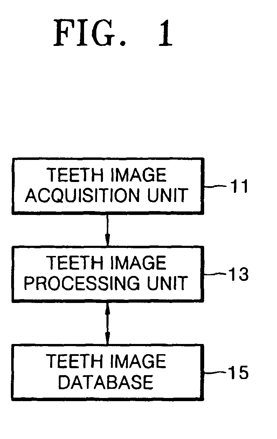

FIG. 1 is a block diagram of a personal identification apparatus using a teeth image according to a preferred embodiment of the present invention. The personal identification apparatus includes a teeth image acquisition unit 11, a teeth image processing unit 13, and a teeth image database 15.

The teeth image acquisition unit 11 is usually composed of a typical digital camera, such as an exclusive camera for photographing teeth, a camera attached to a personal computer, or a camera attached to a mobile communication terminal. When personal identification is required, the teeth image acquisition unit 11 photographs the entire front teeth portion of a person to be identified to acquire a teeth image and provides the teeth image to the teeth image processing unit 13. It is preferable that the teeth are photographed in a state in which the upper teeth are separated from the lower teeth by a predetermined distance in order to facilitate the separate extraction of an upper teeth area and a lower teeth area.

The teeth image processing unit 13 extracts a teeth area from the teeth image provided from the teeth image acquisition unit 11 by performing a thresholding process, a projection process, and an area growth process; detects characteristic elements of the teeth; and searches the teeth image database 15 based on the characteristic elements. Here, various methods can be used to identify the person. For example, a similarity in each characteristic element between a currently input teeth image and a teeth image from the teeth image database 15 is calculated. Identification succeeds when the teeth image database 15 includes a teeth image having the similarity or an average of the similarities in all of the characteristic elements, which exceeds a predetermined reference value, while identification fails when the teeth image database 15 does not include such a teeth image. The reference value may be optimally set through experiments or simulations.

The teeth image database 15 is constructed by acquiring teeth images from many persons and correspondently storing them along with personal information including a personal identifier, teeth information, and the characteristic elements of the teeth. Here, as well as a front view of the teeth, various views thereof can be stored. The characteristic elements of teeth include the shapes and colors of the teeth, an area ratio between teeth, a width ratio between teeth, and a teeth arrangement.

The personal identification apparatus of the present invention can be implemented in personal mobile communication equipment, such as a cellular phone or a personal digital assistant (PDA), so that it can be used for personal identification when security is required, for example, when the personal mobile communication equipment is lost or when electronic payment is performed through the personal mobile communication equipment. In this situation, the teeth image database 15 stores the teeth image of the owner of the mobile communication equipment along with the owner's personal information, teeth information, and characteristic elements of the teeth.

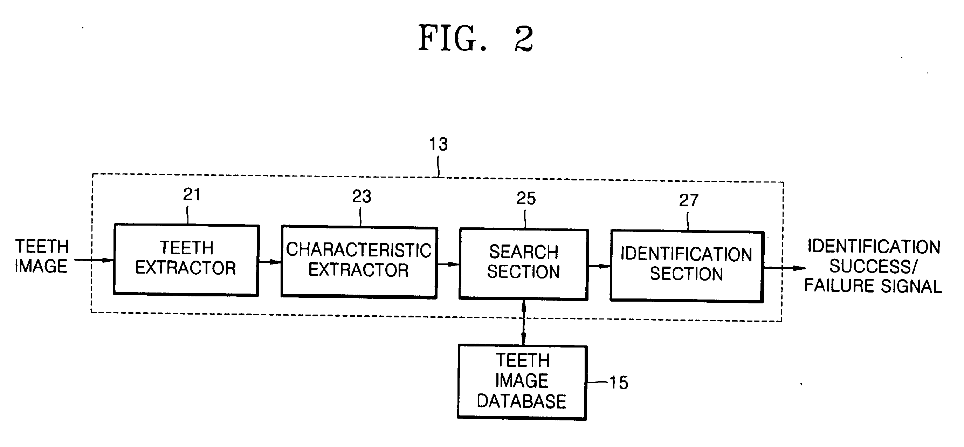

FIG. 2 is a detailed block diagram of the teeth image processing unit 13 shown in FIG. 1. The teeth image processing unit 13 includes a teeth extractor 21, a characteristic detector 23, a search section 25, and an identification section 27.

The teeth extractor 21 extracts a teeth area from a teeth image provided by the teeth image acquisition unit 11. The teeth extractor 21 separates the inner area of a mouth from the teeth image, extracts an interface between an upper teeth portion and a lower teeth portion, and extracts a teeth area based on the extracted interface between the upper and lower teeth portions.

The characteristic detector 23 extracts characteristic elements for identifying an individual's teeth from the teeth area extracted by the teeth extractor 21. Extractable characteristic elements are the shapes and colors of teeth, an area ratio between teeth, a width ratio between teeth, and a teeth arrangement.

Teeth shape and arrangement information can be obtained from an image pattern of the extracted teeth area. Information on the area ratio and the width ratio between the teeth can be obtained by performing vertical projection on the teeth area. Teeth color information can be obtained by performing a histogram process on the brightness of the teeth area.

The search section 25 searches the teeth image database 15 using the teeth characteristic elements detected by the characteristic detector 23. Here, all of the teeth characteristic elements are not simultaneously used, but search using a teeth characteristic element, such as a width ratio between teeth, which requires a short processing time in a projection image, is performed first to extract candidate teeth images having similarities exceeding a reference value. Thereafter, the search section 25 searches the candidate teeth images using the other teeth characteristic elements.

The reference value may be optimally set through experiments or simulations.

The identification section 27 determines that the identification has succeeded when a teeth image that has a similarity with respect to each teeth characteristic element or an average of similarities with respect to all of the teeth characteristic elements, which exceeds a reference value, is found as the result of the search performed by the search section 25. When such a teeth image is not found, the identification section 27 determines that the identification has failed. The identification section 27 outputs a signal corresponding to the result of the determination.

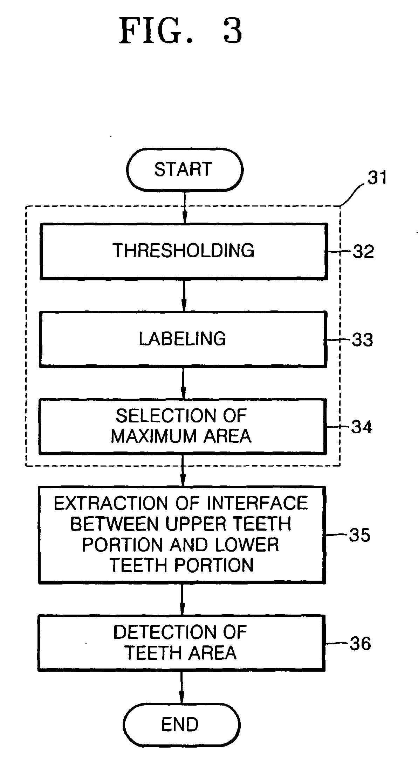

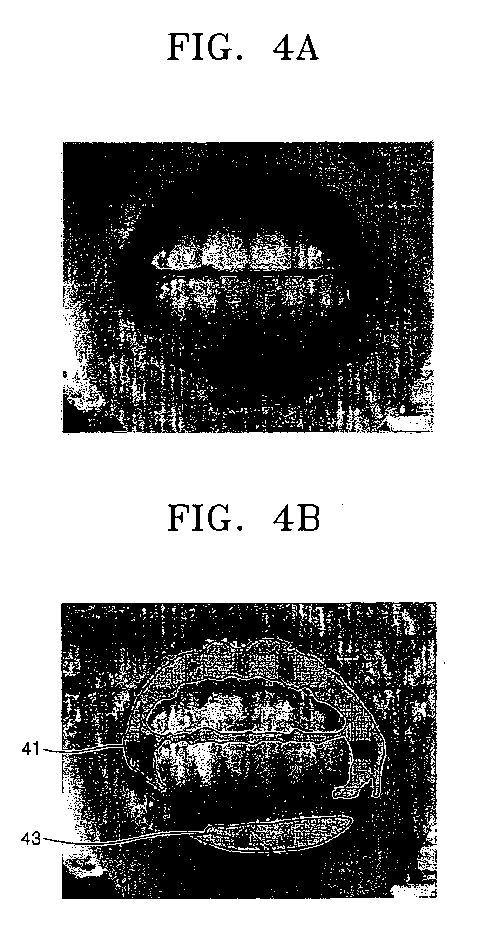

FIG. 3 is a flowchart showing operations performed by the teeth extractor 21 shown in FIG. 2. The teeth extractor 21 performs separation of the inner area of a mouth (31), extraction of an interface between an upper teeth portion and a lower teeth portion (35), and detection of a teeth area (36). The operations shown in FIG. 3 will be described with reference to FIGS. 4A through 4F.

Step 31 is provided in order to separate the inner area of a mouth from a teeth image and includes thresholding (32), labeling (33), and selection of a maximum area (34).

Thresholding is performed on a teeth image (FIG. 4A) using Formula (1) in step 32.

$$g(x) = 1, \quad f(x) \le T$$
$$g(x) = 0, \quad f(x) > T \qquad \qquad \text{...(1)}$$

Here, $f(x)$ is a pixel value at a pixel position x in the teeth image and $0 \le f(x) \le 255$, and $g(x)$ is a pixel value indicating the inner area of a mouth and may have a value of 0 or 1. $T$ is a threshold value, for example, 70, and can be obtained through experiments. In the meantime, at least one among the red ($R$), green ($G$), and blue ($B$) color values of each pixel or $I(x)$ corresponding to a brightness in a Hue Saturation Intensity ($HSI$) color coordinate system can be used as $f(x)$. In order to obtain $I(x)$ from the $R$, $G$, and $B$ color values, an $RGB/HSI$ color coordinate system conversion formula shown in Formula (2) is used. Here, the $RGB$ and $HSI$ color coordinate systems are used, but other various color coordinate systems such as CMY, YIQ, and HSV color coordinate systems can also be used.

$$I = F \frac{R + G + B}{3}$$

$$H = \frac{F}{2\pi} \cos^{-1} \left\{ \frac{\frac{1}{2}[(R-G) + (R-B)]}{[(R-G)^2 + (R-B)(G-B)]^{1/2}} \right\} \qquad \text{...(2)}$$

$$S = F \left\{ 1 - \frac{3}{R + G + B} \min(R, G, B) \right\}$$

Here, $0 \le R, G, B \le 1$, and $F$ is a constant that is typically equal to 255. As a result of performing thresholding according to formula (1) on the teeth image (FIG. 4A) provided by the teeth image acquisition unit 11, first areas set to 0 and second areas set to 1 are defined.

In step 33, labeling is performed on contour portions of the second areas smaller than the first areas so that areas 41 and 43, in which the value of $g(x)$ for each pixel is 1, are separated, as shown in FIG. 4B.

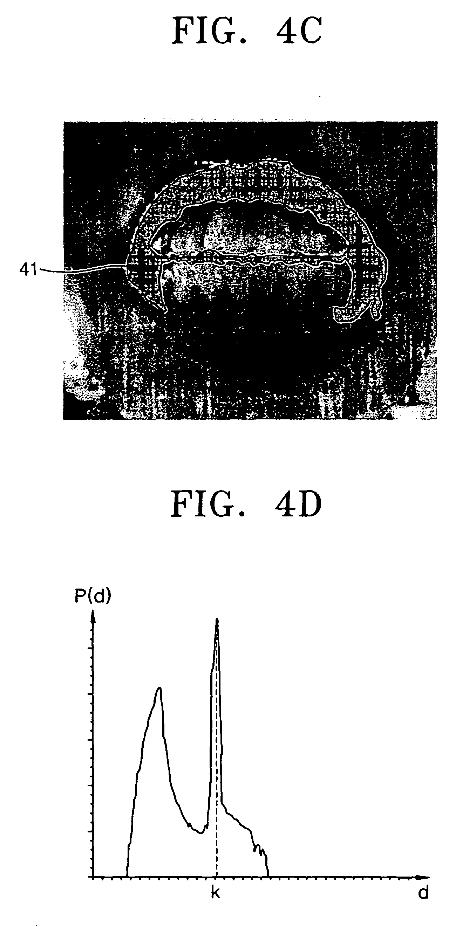

In step 34, the maximum area 41 between the areas 41 and 43 separated as the result of the labeling is selected so that the area 41 is separated as an inner mouth area from the teeth image (FIG. 4A), as shown in FIG. 4C.

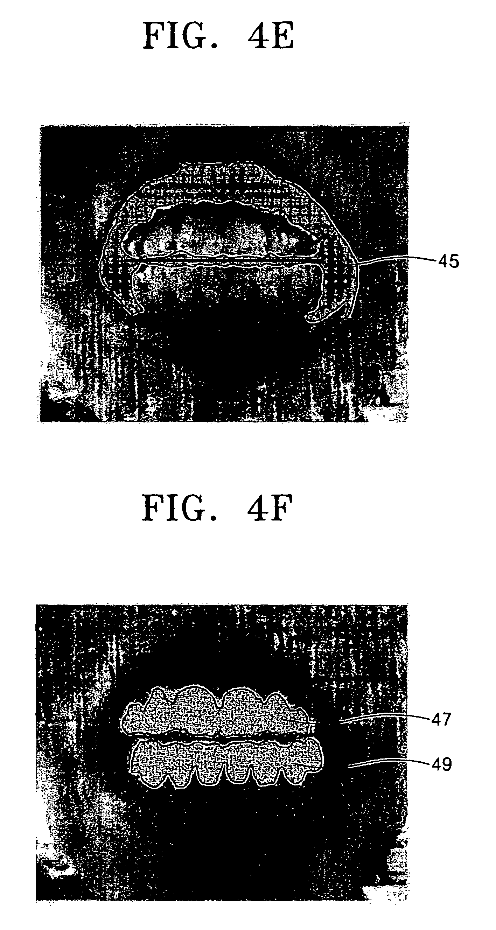

In step 35, a graph shown in FIG. 4D is obtained by performing horizontal projection on the inner mouth area 41 separated in step 34 in order to extract an interface between an upper teeth portion and a lower teeth portion from the teeth image. In FIG. 4D, an X-axis indicates a vertical distance "d" from above to downward in the teeth image, and a Y-axis indicates a thresholded pixel accumulation value P(d) at each position corresponding to the vertical distance "d". As the result of performing the horizontal projection, a position "k" at which the pixel accumulation value P(d) is maximum is selected as a vertical distance corresponding to the interface between the upper teeth portion and the lower teeth portion. Here, it is preferable to make a teeth arrangement horizontal by rotating the teeth image such that a pixel accumulation value P(d) at the position "k" corresponding to the interface between the upper teeth portion and the lower teeth portion becomes a maximum peak. An interline 45 is set, as shown in FIG. 4E, based on the vertical distance "k" corresponding to the interface between the upper teeth portion and the lower teeth portion.

In step 36, an upper teeth area 47 and a lower teeth area 49 are extracted, as shown in FIG. 4F, by performing area growth on the basis of the interline 45 or by setting a predetermined upper area and a predetermined lower area to have a rectangular shape on the basis of the interline 45 and then performing thresholding on the predetermined upper and lower areas. When using an area growth method, seed points are set at predetermined positions, respectively, above and below the interline 45, referring to $H(x)$ corresponding to a hue in the *HSI* color coordinate system, and an area having a similar color to each seed point is extended around the seed point. It is preferable to exclude black and red from the color of the seed point.

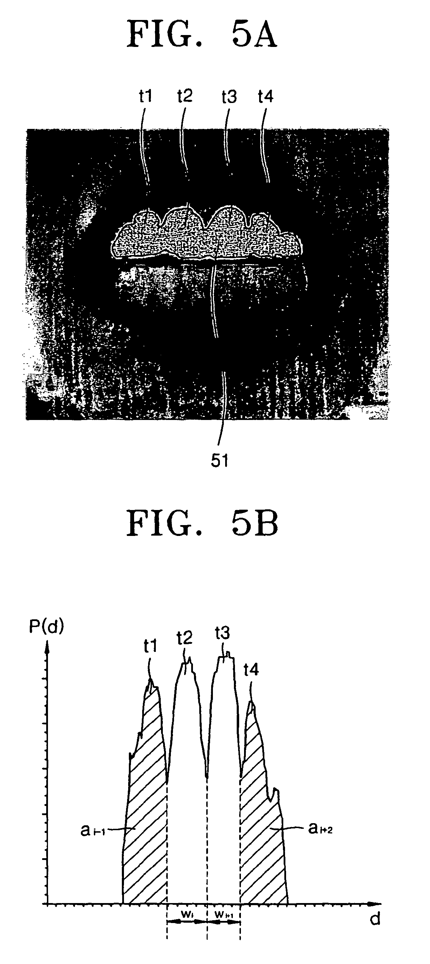

FIGS. 5A and 5B are diagrams for explaining the operation of the characteristic detector 23 shown in FIG. 2. A graph shown in FIG. 5B is obtained as the result of performing vertical projection on an upper teeth area 51 shown in FIG. 5A. In FIG. 5B, an X-axis indicates a horizontal distance "d" from left to right in a teeth image, and a Y-axis indicates a thresholded pixel accumulation value P(d) at each position corresponding to the horizontal distance "d". As the result of performing the vertical projection, four peaks having large pixel accumulation values P(d) are generated, and portions that are formed based on the four peaks, respectively, correspond to four teeth t1 through t4, respectively, that exist in the upper teeth area 51. By performing the vertical projection, the number of teeth, a tooth area (e.g., $a_{i-1}$ or $a_{i+2}$), an area ratio (e.g., $a_{i-1}/a_{i+2}$), a tooth width (e.g., $w_i$ or $w_{i+1}$), and a width ratio (e.g., $w_i/w_{i+1}$) can be calculated.

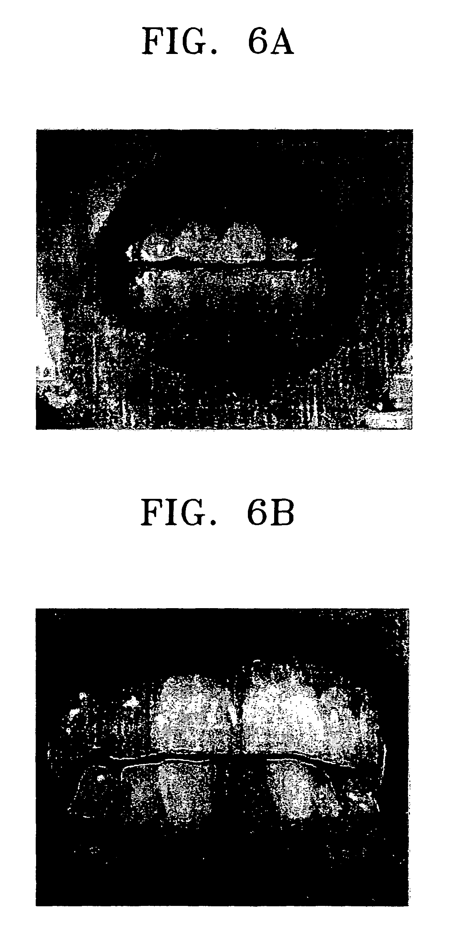

A personal identification method according to an embodiment of the present invention will be simply described with reference to examples of different persons' teeth images (referred to as an object #1 and an object #2, respectively) shown in FIGS. 6A and 6B, respectively.

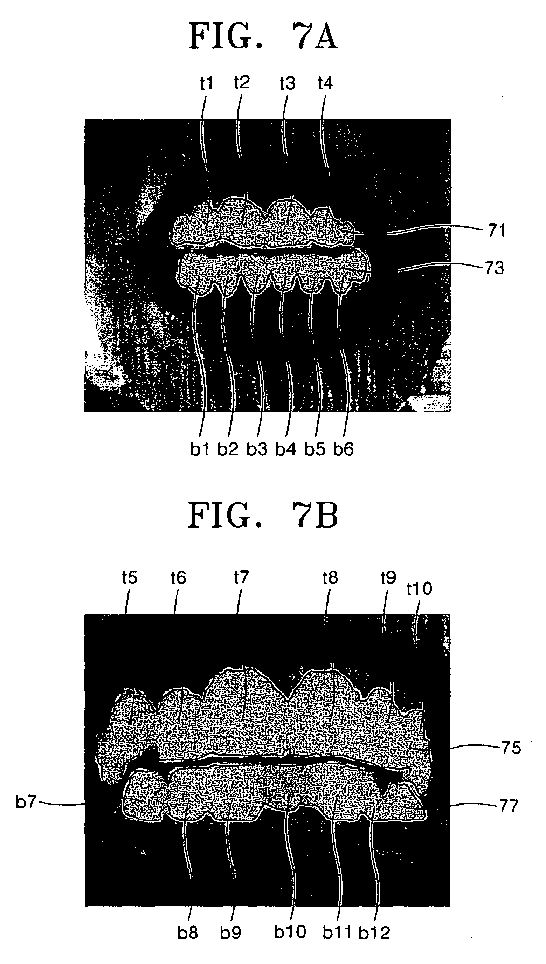

FIGS. 7A and 7B show upper teeth areas 71 and 75 and lower teeth areas 73 and 77, respectively, which are extracted by performing thresholding, labeling, selection of a maximum area, vertical projection, and area growth on the teeth images shown in FIGS. 6A and 6B.

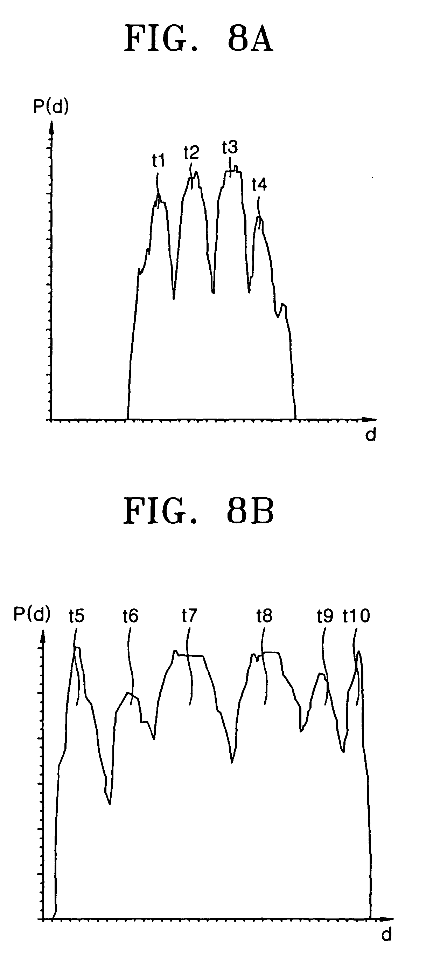

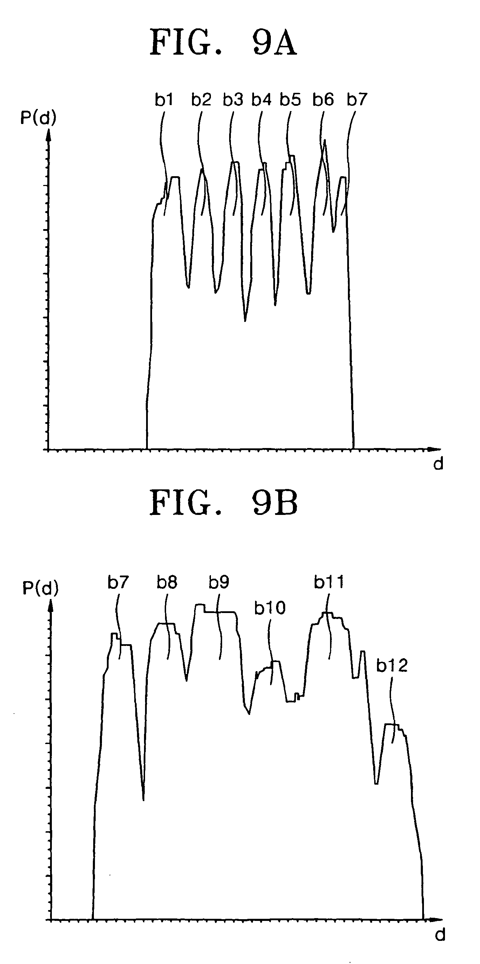

FIGS. 8A and 8B are graphs showing the results of performing vertical projection on the upper teeth areas 71 and 75 shown in the FIGS. 7A and 7B, respectively. FIGS. 9A and 9B are graphs showing the results of performing vertical projection on the lower teeth areas 73 and 77 shown in the FIGS. 7A and 7B, respectively. Referring to FIGS. 8A and 8B, teeth t1 through t4 exist in the upper teeth area 71 of the teeth image shown in FIG. 6A, and teeth t5 through t10 exist in the upper teeth area 75 of the teeth image shown in FIG. 6B. Referring to FIGS. 9A and 9B, teeth b1 through b6 exist in the lower teeth area 73 of the teeth image shown in FIG. 6A, and teeth b7 through b12 exist in the lower teeth area 77 of the teeth image shown in FIG. 6B.

In this personal identification technique, the number of teeth, a central position of each tooth, and a width of each tooth, which are obtained through vertical projection, are used as teeth characteristic elements. These teeth characteristic elements can be calculated from FIGS. 8A through 9B, as shown in the following table.

| Object | | Number of teeth | Central position of each tooth | Width of each tooth |
|---|---|---|---|---|
| Object #1 | Upper teeth | 4 | 116, 159, 200, 236 | 37, 42, 39, 24 |
| | Lower teeth | 6 | 113, 144, 171, 198, 233, 259 | 28, 20, 19, 20, 21, 31 |
| Object #2 | Upper teeth | 6 | 45, 94, 156, 237, 289, 322 | 29, 26, 68, 63, 28, 17 |
| | Lower teeth | 7 | 65, 82, 155, 197, 250, 272, 287 | 29, 38, 50, 28, 48, 7, 29 |

Referring to the above table, it can be concluded that people have greatly different teeth characteristic elements from one another so that personal identification can be performed using the teeth characteristic elements.

The present invention can be realized as program codes which are recorded on a computer readable recording medium and can be read by a computer. For example, a method of extracting a teeth area from a teeth image can be implemented by recording on a computer readable recording medium a first program for performing thresholding on a teeth image of a person to be identified using a predetermined threshold value, and selecting a maximum area from areas that are defined by performing labeling on thresholded pixels, thereby separating an inner mouth area from the teeth image; a second program for performing horizontal projection on the inner mouth area and setting an interline between an upper teeth portion and a lower teeth portion based on a position, at which a pixel accumulation value is maximum as the result of the horizontal projection; and a third program for extracting upper and lower teeth areas on the basis of the interline. Further, a personal identification method using a teeth image can be implemented by recording on a computer readable recording medium a first program for constructing a database by correspondently storing teeth images from a plurality of persons and at least one teeth characteristic element of each person; a second program for extracting an interline between an upper teeth portion and a lower teeth portion from an inner mouth area that is separated from a teeth image of a person to be identified, and extracting an upper teeth area and a lower teeth area on the basis of the interline; a third program for detecting one or more teeth characteristic elements from the upper and lower teeth areas; and a fourth program for searching the database based on the detected one or more teeth characteristic elements and determining identification pass or fail according to a similarity between the teeth image of the person to be identified and a teeth image searched from the database.

The computer readable recording medium may be any type of medium on which data which can be read by a computer system can be recorded, for example, a ROM, a RAM, a CD-ROM, a magnetic tape, a floppy disc, or an optical data storage device. The present invention can also be realized as carrier waves (for example, transmitted through Internet). Alternatively, computer readable recording media are distributed among computer systems connected through a network so that the present invention can be realized as a code which is stored in the recording media and can be read and executed in the computers. Functional programs, codes, or code segments for implementing the present invention can be easily inferred by programmers skilled in the field of this invention.

As described above, according to the present invention, in a situation requiring personal identification, for example, when a person enters a particular area, deposits or withdraws money at an automatic teller machine (ATM), or uses an electronic payment service through mobile communication equipment, personal identification is performed using a teeth image, which is simply recognizable and from which characteristic elements are simply extracted, thereby increasing the speed of personal identification and decreasing the cost for implementation.

In addition, a personal identification method and apparatus according to the present invention can be combined with conventional identification technology using a password in a simple stage or can be easily combined with conventional identification technology using a face, a fingerprint, an iris, veins in the back of the hand, or a voice when a high degree of personal identification is required.

In the drawings and specification, preferred embodiments of the invention have been described using specific terms but it is to be understood that such terms have been used only in a descriptive sense and such descriptive terms should not be construed as placing any limitation on the scope of the invention. Accordingly, it will be apparent to those of ordinary skill in the art that various changes can be made to the embodiments without departing from the scope of the invention, as defined by the appended claims.

**Claims**

1. A method of identifying a person, the method comprising extracting an upper teeth area and a lower teeth area from a teeth image by :

   separating an inner mouth area from a teeth area of the teeth image (31);
   defining an interline between an upper teeth portion and a lower teeth portion of the teeth area on the basis of the inner mouth area (35); and
   extracting an upper teeth area and a lower teeth area on the basis of the interline (36).

2. The method of claim 1, wherein separating the inner mouth area (31) comprises:

   defining first areas and second areas by performing thresholding on each pixel of the teeth image using a predetermined threshold value (32);
   labeling contour portions of the second areas smaller than the first areas (33); and
   selecting and determining a maximum area among the labeled second areas as the inner mouth area (34).

3. The method of claim 2, wherein defining the first and second areas (32) comprises performing thresholding using at least one among red, green, and blue color values of each pixel in the teeth image.

4. The method of claim 2, wherein defining the first and second areas (32) comprises converting RGB color values of each pixel in the teeth image into HSI color values and performing the thresholding using the converted I color value.

5. The method of any one of the preceding claims, wherein defining the interline (35) comprises:

   performing horizontal projection on the inner mouth area; and
   setting the interline based on a position at which a pixel accumulation value is maximum as the result of the horizontal projection.

6. The method of any one of the preceding claims, wherein extracting the upper and lower teeth areas (36) comprises extending an area having a similar color to each of seed points, which are respectively set at predetermined positions above and below the interline, from the seed point.

7. The method of any one of claims 1 to 5, wherein extracting the upper and lower teeth areas (36) comprises:

setting a predetermined upper area and a predetermined lower area to have a rectangular shape on the basis of the interline; and

performing thresholding on the predetermined upper and lower areas using a predetermined threshold value.

8. A personal identification method using a teeth image, comprising:

a. constructing a database by correspondently storing teeth images from a plurality of persons and at least one teeth characteristic element of each person;

b. the method of any one of claims 1 to 7;

c. detecting one or more teeth characteristic elements from the upper and lower teeth areas; and

d. searching the database based on the detected one or more teeth characteristic elements and determining identification pass or fail according to a similarity between the teeth image of the person to be identified and a teeth image searched from the database.

9. The personal identification method of claim 8, wherein step c. comprises:

performing vertical projection on each of the extracted upper and lower teeth areas; and

obtaining information on the number of teeth in the upper and lower teeth areas, an area ratio between teeth, and a width ratio between teeth from the result of the vertical projection.

10. The personal identification method of claim 8, wherein step c. comprises obtaining information on shapes of teeth and teeth arrangement from an image pattern of the extracted upper and lower teeth areas.

11. The personal identification method of claim 8, wherein step c. comprises obtaining information on colors of teeth by obtaining a brightness histogram of the extracted upper and lower teeth areas.

12. The personal identification method of any one of claims 8 to 11, wherein step d. comprises:

searching the database using one of the detected teeth characteristic elements to extract candidate teeth images; and

searching the candidate teeth images using at least one teeth characteristic element among the other teeth characteristic elements than the one used to extract the candidate teeth images.

13. A computer readable recording medium on which is recorded a program for performing the method of any one of the preceding claims.

14. The computer readable recording medium of claim 13, wherein the program comprises a separate program for each method step.

15. A personal identification apparatus comprising

a teeth image database (15) for correspondently storing teeth images from a plurality of persons and at least one teeth characteristic element of each of the persons;

a teeth image acquisition unit (11) arranged to acquire a teeth image of a person to be identified;

a teeth area extractor (21) arranged to perform first thresholding on the teeth image provided from the teeth image acquisition unit (11) to separate an inner mouth area from a teeth area of the teeth image, perform horizontal projection on the inner mouth area to define an interline between an upper teeth portion and a lower teeth portion, and extract an upper teeth area and a lower teeth area based on the interline;

a characteristic detector (23) arranged to perform vertical projection on the extracted upper and lower teeth areas to detect one or more teeth characteristic elements for distinguishing an individual person's teeth from others;

a search section (25) arranged to search the teeth image database (15) using at least one among the teeth characteristic elements detected by the characteristic detector (23); and

an identification section (27) arranged to determine identification pass or fail according to a similarity between the teeth image of the person to be identified and a teeth image searched from the search section (25).

16. The personal identification apparatus of claim 15, wherein the teeth area extractor (21) is arranged to extend an area having a similar color to each of seed points, which are respectively set at predetermined positions above and below the interline, from the seed point in order to extract the upper and lower teeth areas.

17. The personal identification apparatus of claim 15, wherein the teeth area extractor (21) is arranged to set a predetermined upper area and a predetermined lower area to have a rectangular shape on the basis of the interline and performs second thresholding on the predetermined upper and lower areas, in order to extract the upper and lower teeth areas.

18. The personal identification apparatus of any one of claims 15 to 17, wherein the characteristic detector (23) is arranged to obtain a brightness histogram of the extracted upper and lower teeth areas in addition to the vertical projection on the teeth area.

19. The personal identification apparatus of any one of claims 15 to 18, wherein the search section (25) is arranged to search the teeth image database (15) using one of the detected teeth characteristic elements to extract candidate teeth images, and search the candidate teeth images using at least one teeth characteristic element among the other teeth characteristic elements than the one used to extract the candidate teeth images.

**Patentansprüche**

1. Verfahren zum Identifizieren einer Person, wobei das Verfahren ein Extrahieren eines oberen Zahnbereichs und eines unteren Zahnbereichs aus einem Zahnbild umfasst, in dem
ein Mundinnenbereich von einem Zahnbereich des Zahnbilds (31) separiert wird,
eine Zwischenlinie zwischen einem oberen Zahnabschnitt und einem unteren Zahnabschnitt des Zahnbereichs auf Basis des Mundinnenbereichs (35) definiert wird und
ein oberer Zahnbereich und ein unterer Zahnbereich auf Basis der Zwischenlinie (36) extrahiert wird.

2. Verfahren nach Anspruch 1, wobei das Separieren des Mundinnenbereichs (31) umfasst:

Definieren erster Bereiche und zweiter Bereiche durch Ausführen einer Schwellenwertbildung an jedem Pixel des Zahnbilds unter Verwendung eines vorgegebenen Schwellenwerts (32),
Markieren von Konturabschnitten der zweiten Bereiche, die kleiner sind als die ersten Bereiche (33), und
Auswählen und Bestimmen eines maximalen Bereichs aus den markierten zweiten Bereichen als den Mundinnenbereich (34).

3. Verfahren nach Anspruch 2, wobei das Definieren der ersten und zweiten Bereiche (32) ein Ausführen einer Schwellenwertbildung unter Verwendung von roten, grünen und/oder blauen Farbwerten jedes Pixels im Zahnbild umfasst.

4. Verfahren nach Anspruch 2, wobei das Definieren der ersten und zweiten Bereiche (32) ein Umwandeln von RGB-Farbwerten jedes Pixels im Zahnbild in HSI-Farbwerte und ein Ausführen der Schwellenwertbildung unter Verwendung des umgewandelten I-Farbwerts umfasst.

5. Verfahren nach einem der vorhergehenden Ansprüche, wobei das Definieren der Zwischenlinie (35) umfasst:

Ausführen einer horizontalen Projektion am Mundinnenbereich und
Festlegen der Zwischenlinie basierend auf einer Position, an der ein Pixelakkumulationswert als Folge der horizontalen Projektion maximal ist.

6. Verfahren nach einem der vorhergehenden Ansprüche, wobei das Extrahieren des oberen Zahnbereichs und des unteren Zahnbereichs (36) ein Erweitern eines Bereichs mit einer ähnlichen Farbe wie jeder Seedpoint, die jeweils an vorgegebenen Positionen über und unter der Zwischenlinie festgelegt sind, von dem Seedpoint umfasst.

7. Verfahren nach einem der Ansprüche 1 bis 5, wobei das Extrahieren des oberen Zahnbereichs und des unteren Zahnbereichs (36) umfasst:

Festlegen eines vorgegebenen oberen Bereichs und eines vorgegebenen unteren Bereichs auf Basis der Zwischenlinie so, dass sie eine rechteckige Form aufweisen, und

Ausführen einer Schwellenwertbildung unter Verwendung eines vorgegebenen Schwellenwerts am vorgegebenen oberen und unteren Bereich.

8. Personenidentifikationsverfahren unter Verwendung eines Zahnbilds, umfassend:

a. Aufbau einer Datenbank durch entsprechendes Speichern von Zahnbildern von einer Mehrzahl von Personen und mindestens einem Zahnmerkmalselement jeder Person,
b. das Verfahren nach einem der Ansprüche 1 bis 7,
c. Detektieren eines oder mehrerer Zahnmerkmalselemente aus dem oberen und unteren Zahnbereich und
d. Durchsuchen der Datenbank basierend auf dem einen oder den mehreren detektierten Zahnmerkmalselementen und Bestimmen einer erfolgten oder einer nicht erfolgten Identifikation aufgrund einer Ähnlichkeit zwischen dem Zahnbild der zu identifizierenden Person und einem aus der Datenbank gesuchten Zahnbild.

9. Personenidentifikationsverfahren nach Anspruch 8, wobei Schritt c. umfasst:

Ausführen einer vertikalen Projektion an jedem der extrahierten oberen und unteren Zahnbereiche und Ermitteln von Informationen zur Anzahl an Zähnen im oberen und unteren Zahnbereich, einem Flächenverhältnis zwischen Zähnen und einem Breitenverhältnis zwischen Zähnen aus dem Ergebnis der vertikalen Projektion.

10. Personenidentifikationsverfahren nach Anspruch 8, wobei Schritt c. umfasst:

Ermitteln von Informationen zur Form von Zähnen und einer Zahnanordnung aus einem Bildmuster der extrahierten oberen und unteren Zahnbereiche.

11. Personenidentifikationsverfahren nach Anspruch 8, wobei Schritt c. umfasst:

Ermitteln von Informationen zu Farben von Zähnen durch Ermitteln eines Helligkeitshistogramms der extrahierten oberen und unteren Zahnbereiche.

12. Personenidentifikationsverfahren nach einem der Ansprüche 8 bis 11, wobei Schritt d. umfasst:

Durchsuchen der Datenbank unter Verwendung eines der detektierten Zahnmerkmalselemente zum Extrahieren von potentiellen Zahnbildern und
Durchsuchen der potentiellen Zahnbilder unter Verwendung von mindestens einem Zahnmerkmalselement aus den anderen Zahnmerkmalselementen als dem einen, das zum Extrahieren der potentiellen Zahnbilder verwendet wurde.

13. Computerlesbares Aufzeichnungsmedium, auf dem ein Programm zum Ausführen des Verfahrens nach einem der vorhergehenden Ansprüche aufgezeichnet ist.

14. Computerlesbares Aufzeichnungsmedium nach Anspruch 13, wobei das Programm ein separates Programm für jeden Verfahrensschritt umfasst.

15. Vorrichtung zur Personenidentifizierung umfassend:

eine Zahnbilddatenbank (15) zum entsprechenden Speichern von Zahnbildern von einer Mehrzahl von Personen und mindestens einem Zahnmerkmalselement jeder der Personen,
eine Zahnbilderfassungseinheit (11), die dazu ausgebildet ist, ein Zahnbild einer zu identifizierenden Person zu erfassen,
einen Zahnbereichsextraktor (21), der dazu ausgebildet ist, eine erste Schwellenwertbildung am von der Zahnbilderfassungseinheit (12) bereitgestellten Zahnbild auszuführen, um einen Mundinnenbereich von einem Zahnbereich des Zahnbilds zu separieren, eine horizontale Projektion am Mundinnenbereich vorzunehmen, um eine Zwischenlinie zwischen einem oberen Zahnbereich und einem unteren Zahnbereich zu definieren, und einen oberen Zahnbereich und einen unteren Zahnbereich basierend auf der Zwischenlinie zu extrahieren,
einen Merkmalsdetektor (23), der dazu ausgebildet ist, eine vertikale Projektion an den extrahierten oberen und unteren Zahnbereichen vorzunehmen, um ein oder mehrere Zahnmerkmalselemente zum Unterscheiden der Zähne einer einzelnen Person von anderen zu detektieren, eine Durchsuchungssektion (25), die dazu ausgebildet ist, die Zahnbilddatenbank (15) unter Verwendung von mindestens einem unter den Zahnmerkmalselementen, die vom Merkmalsdetektor (23) detektiert sind, zu durchsuchen und

eine Identifikationssektion (27), die dazu ausgebildet ist, eine erfolgte oder nicht erfolgte Identifikation aufgrund einer Ähnlichkeit zwischen dem Zahnbild der zu identifizierenden Person und einem von der Durchsuchungssektion (25) gesuchten Zahnbild zu bestimmen.

16. Vorrichtung zur Personenidentifizierung nach Anspruch 15, wobei der Zahnbereichsextraktor (21) dazu ausgebildet ist, einen Bereich mit einer ähnlichen Farbe wie Seedpoints, die jeweils an vorgegebenen Positionen über und unter der Zwischenlinie festgelegt sind, vom Seedpoint zu erweitern, um den oberen und unteren Zahnbereich zu extrahieren.

17. Vorrichtung zur Personenidentifizierung nach Anspruch 15, wobei der Zahnbereichsextraktor (21) dazu ausgebildet ist, einen vorgegebenen oberen Bereich und einen vorgegebenen unteren Bereich auf Basis der Zwischenlinie so festzulegen, dass sie eine rechteckige Form aufweisen, und eine zweite Schwellenwertbildung an dem vorgegebenen oberen und unteren Bereich vorzunehmen, um den oberen und unteren Zahnbereich zu extrahieren.

18. Vorrichtung zur Personenidentifizierung nach einem der Ansprüche 15 bis 17, wobei der Merkmalsdetektor (23) dazu ausgebildet ist, zusätzlich zur vertikalen Projektion am Zahnbereich ein Helligkeitshistogramm des extrahierten oberen und unteren Zahnbereichs zu ermitteln.

19. Vorrichtung zur Personenidentifizierung nach einem der Ansprüche 15 bis 18, wobei die Durchsuchungssektion (25) dazu ausgebildet ist, die Zahnbilddatenbank (15) unter Verwendung von einem der detektierten Zahnmerkmalselemente zu durchsuchen, um potentielle Zahnbilder zu extrahieren, und die potentiellen Zahnbilder unter Verwendung von mindestens einem Zahnmerkmalselement aus den anderen Zahnmerkmalselementen als dem einen, das zum Extrahieren der potentiellen Zahnbilder verwendet wurde, zu durchsuchen.

**Revendications**

1. Procédé d'identification d'une personne, le procédé comprenant l'extraction d'une zone de dents supérieure et d'une zone de dents inférieure d'une image de dents en :

séparant une zone de bouche interne d'une zone de dents de l'image de dents (31) ;
définissant un interligne entre une partie de dents supérieure et une partie de dents inférieure de la zone de dents sur la base de la zone de bouche interne (35) ; et
extrayant une zone de dents supérieure et une zone de dents inférieure sur la base de l'interligne (36).

2. Procédé selon la revendication 1, dans lequel la séparation de la zone de bouche interne (31) comprend les étapes consistant à :

définir des premières zones et des deuxièmes zones en appliquant un seuil à chaque pixel de l'image de dents en utilisant une valeur de seuil (32) prédéterminée ;
marquer les parties de contour des deuxièmes zones plus petites que les premières zones (33) ; et
sélectionner et déterminer une zone maximum parmi les deuxièmes zones marquées en tant que zone de bouche interne (34).

3. Procédé selon la revendication 2, dans lequel la définition des premières et deuxièmes zones (32) comprend l'application d'un seuil en utilisant au moins une value parmi les valeurs des couleurs rouge, vert et bleu de chaque pixel dans l'image de dents.

4. Procédé selon la revendication 2, dans lequel la définition des premières et deuxièmes zones (32) comprend la conversion des valeurs des couleurs RVB de chaque pixel de l'image de dents en des valeurs des couleurs HSI et l'application du seuil en utilisant la valeur de couleur I convertie.

5. Procédé selon l'une quelconque des revendications précédentes, dans lequel la définition de l'interligne (35) comprend les étapes consistant à :

effectuer une projection horizontale sur la zone de bouche interne ; et
définir l'interligne sur la base d'une position à laquelle une valeur d'accumulation de pixels est maximum en conséquence de la projection horizontale.

6. Procédé selon l'une quelconque des revendications précédentes, dans lequel l'extraction des zones de dents supérieure et inférieure (36) comprend l'extension d'une zone ayant une couleur similaire à chacun des points germes, qui sont respectivement placés à des positions prédéterminées au-dessus et au-dessous de l'interligne, à partir du point germe.

7. Procédé selon l'une quelconque des revendications 1 à 5, dans lequel l'extraction des zones de dents supérieure et inférieure (36) comprend les étapes consistant à :

définir une zone supérieure prédéterminée et une zone inférieure prédéterminée pour obtenir une forme rectangulaire sur la base de l'interligne ; et
appliquer un seuil aux zones supérieure et inférieure prédéterminées en utilisant une valeur de seuil prédéterminée.

8. Procédé d'identification de personne utilisant une image de dents, comprenant :

a. l'élaboration d'une base de données en mémorisant en correspondance des images de dents d'une pluralité de personnes et au moins un élément caractéristique des dents de chaque personne ;
b. le procédé selon l'une quelconque des revendications 1 à 7 ;
c. la détection d'un ou de plusieurs éléments caractéristiques des dents dans les zones de dents supérieure et inférieure ; et
d. l'exécution d'une recherche dans la base de données sur la base d'un ou de plusieurs éléments caractéristiques des dents détectés et la détermination d'une réussite ou d'un échec de l'identification en fonction d'une similarité entre l'image de dents de la personne à identifier et une image de dents recherchée dans la base de données.

9. Procédé d'identification de personne selon la revendication 8, dans lequel l'étape c comprend les étapes consistant à :

effectuer une projection verticale sur chacune des zones de dents supérieure et inférieure extraites ; et
obtenir des informations concernant le nombre de dents dans les zones de dents supérieure et inférieure, un rapport de surface entre les dents, et un rapport de largeur entre les dents à partir du résultat de la projection verticale.

10. Procédé d'identification de personne selon la revendication 8, dans lequel l'étape c comprend l'obtention d'informations concernant les formes des dents et l'agencement des dents à partir d'un motif d'image des zones de dents supérieure et inférieure extraites.

11. Procédé d'identification de personne selon la revendication 8, dans lequel l'étape c comprend l'obtention d'informations concernant les couleurs des dents en obtenant un histogramme de luminosité des zones de dents supérieure et inférieure extraites.

12. Procédé d'identification de personne selon l'une quelconque des revendications 8 à 11, dans lequel l'étape d comprend les étapes consistant à :

effectuer une recherche dans la base de données en utilisant un des éléments caractéristiques des dents détectés pour extraire des images de dents candidates ; et
effectuer une recherche dans les images de dents candidates en utilisant au moins un élément caractéristique des dents parmi les éléments caractéristiques des dents autres que celui utilisé pour extraire les images de dents candidates.

13. Support d'enregistrement pouvant être lu par un ordinateur sur lequel est enregistré un programme pour mettre en oeuvre le procédé selon l'une quelconque des revendications précédentes.

14. Support d'enregistrement pouvant être lu par un ordinateur selon la revendication 13, sur lequel le programme comprend un programme séparé pour chaque étape de procédé.

15. Dispositif d'identification de personne comprenant :

une base de données d'images de dents (15) pour mémoriser en correspondance des images de dents d'une pluralité de personnes et au moins un élément caractéristique des dents de chacune des personnes ;

une unité d'acquisition d'image de dents (11) agencée pour acquérir une image de dents d'une personne à identifier ;

un extracteur de zone de dents (21) agencé pour appliquer un premier seuil à l'image de dents fournie par l'unité d'acquisition d'image de dents (11) pour séparer une zone de bouche interne d'une zone de dents de l'image de dents, effectuer une projection horizontale sur la zone de bouche interne pour définir un interligne entre une partie de dents supérieure et une partie de dents inférieure, et extraire une zone de dents supérieure et une zone de dents inférieure sur la base de l'interligne ;

un détecteur de caractéristique (23) agencé pour effectuer une projection verticale sur les zones de dents supérieure et inférieure extraites pour détecter un ou plusieurs éléments caractéristiques des dents pour distinguer les dents d'une personne individuelle des autres ;

une section de recherche (25) agencée pour effectuer une recherche dans la base de données d'images de dents (15) en utilisant au moins un élément parmi les éléments caractéristiques des dents détectés par le détecteur de caractéristique (23) ; et

une section d'identification (27) agencée pour déterminer la réussite ou l'échec de l'identification en fonction d'une similarité entre l'image de dents de la personne à identifier et une image de dents recherchée par la section de recherche (25).

16. Dispositif d'identification de personne selon la revendication 15, dans lequel l'extracteur de zone de dents (21) est agencé pour étendre une zone ayant une couleur similaire à chacun des points germes, qui sont respectivement placés à des positions prédéterminées au-dessus et au-dessous de l'interligne, à partir du point germe afin d'extraire les zones de dents supérieure et inférieure.

17. Dispositif d'identification de personne selon la revendication 15, dans lequel l'extracteur de zone de dents (21) est agencé pour définir une zone supérieure prédéterminée et une zone inférieure prédéterminée pour obtenir une forme rectangulaire sur la base de l'interligne et applique un deuxième seuil aux zones supérieure et inférieure prédéterminées, afin d'extraire les zones de dents supérieure et inférieure.

18. Dispositif d'identification de personne selon l'une quelconque des revendications 15 à 17, dans lequel le détecteur de caractéristique (23) est agencé pour obtenir un histogramme de luminosité des zones de dents supérieure et inférieure extraites en plus de la projection verticale sur la zone de dents.

19. Dispositif d'identification de personne selon l'une quelconque des revendications 15 à 18, dans lequel la section de recherche (25) est agencée pour effectuer une recherche dans la base de données d'images de dents (15) en utilisant un des éléments caractéristiques des dents détectés pour extraire des images de dents candidates, et pour effectuer une recherche parmi les images de dents candidates en utilisant au moins un élément caractéristique des dents parmi les éléments caractéristiques des dents autres que celui utilisé pour extraire les images de dents candidates.

# FIG. 1

```
┌─────────────────────┐
│    TEETH IMAGE      │──11
│  ACQUISITION UNIT   │
└─────────────────────┘
           │
           ▼
┌─────────────────────┐
│    TEETH IMAGE      │──13
│  PROCESSING UNIT    │
└─────────────────────┘
           ▲
           │
           ▼
┌─────────────────────┐
│    TEETH IMAGE      │──15
│     DATABASE        │
└─────────────────────┘
```

# FIG. 2

TEETH IMAGE → **TEETH EXTRACTOR** (21) → **CHARACTERISTIC EXTRACTOR** (23) → **SEARCH SECTION** (25) → **IDENTIFICATION SECTION** (27) → IDENTIFICATION SUCCESS/ FAILURE SIGNAL

13

**TEETH IMAGE DATABASE** —15

EP 1 434 164 B1

# FIG. 3

```
              ┌─────────┐
              │  START  │
              └─────────┘ ╮──── 31
                  │
    ┌ ─ ─ ─ ─ ─ ─ │ ─ ─ ─ ─ ─ ┐
    │    ┌────────▼────────┐    
    │    │  THRESHOLDING   │────┤── 32
    │    └────────┬────────┘    
    │             │             │
    │    ┌────────▼────────┐    
    │    │    LABELING     │────┤── 33
    │    └────────┬────────┘    
    │             │             │
    │    ┌────────▼────────┐    
    │    │  SELECTION OF   │────┤── 34
    │    │  MAXIMUM AREA   │    
    │    └────────┬────────┘    │
    └ ─ ─ ─ ─ ─ ─ │ ─ ─ ─ ─ ─ ┘
         ┌────────▼────────┐
         │ EXTRACTION OF   │
         │ INTERFACE       │
         │ BETWEEN UPPER   │──── 35
         │ TEETH PORTION   │
         │ AND LOWER       │
         │ TEETH PORTION   │
         └────────┬────────┘
         ┌────────▼────────┐
         │  DETECTION OF   │──── 36
         │   TEETH AREA    │
         └────────┬────────┘
              ┌───▼─────┐
              │   END   │
              └─────────┘
```

# FIG. 4A

# FIG. 4B

# FIG. 4C

41

# FIG. 4D

# FIG. 4E

45

# FIG. 4F

47

49

# FIG. 5A

t1  t2  t3  t4

51

# FIG. 5B

P(d)

t1  t2  t3

t4

$a_{i-1}$

$a_{i+2}$

$W_i$  $W_{i+1}$

d

FIG. 6A

FIG. 6B

## FIG. 7A

t1 t2 t3 t4

71

73

b1 b2 b3 b4 b5 b6

## FIG. 7B

t5 t6 t7 t8 t9 t10

b7

75

77

b8 b9 b10 b11 b12

# FIG. 8A

# FIG. 8B

## FIG. 9A

## FIG. 9B

**EP 1 434 164 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5680479 A
- US 20020186818 A1
- US 6028960 A